Europäisches Patentamt

European Patent Office

Office européen des brevets

(11) Veröffentlichungsnummer: **0 185 419**

**A2**

(12) # EUROPÄISCHE PATENTANMELDUNG

(21) Anmeldenummer: 85201987.6

(22) Anmeldetag: 27.11.85

(51) Int. Cl.⁴: **G 02 B 26/00**
G 02 B 26/02, G 02 B 27/22
G 02 B 27/26, G 02 F 1/133

(30) Priorität: 17.12.84 DE 3445973

(43) Veröffentlichungstag der Anmeldung:
25.06.86 Patentblatt 86/26

(84) Benannte Vertragsstaaten:
DE FR GB

(71) Anmelder: Philips Patentverwaltung GmbH
Billstrasse 80
D-2000 Hamburg 28(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB

(72) Erfinder: Dallas, William John, Dr.
University of Arizona
Tucson Arizona 85724(US)

(74) Vertreter: Poddig, Dieter et al,
Philips Patentverwaltung GmbH Billstrasse 80 Postfach
10 51 49
D-2000 Hamburg 28(DE)

(54) Anordnung zur Erzeugung eines Bildes.

(57) Zur Erzeugung eines Bildes werden mindestens zwei transparente Einzelbilder (12, 13) hintereinander angeordnet, bei denen die Transparenzen der einzelnen Bildelemente (21-25) so gewählt sind, daß der Mittelwert der Produkte der Transparenzen von jeweils in Blickrichtung hintereinander liegenden Bildelementen über eine Anzahl benachbarter Bildelemente die Transparenz des zu erzeugenden Bildes ergeben. Dabei können die beiden Einzelbilder völlig unabhängig voneinander und vom zu erzeugenden Bild sein, wobei sich lediglich eine gewisse Einschränkung des Bereichs der Transparenzwerte ergibt. Wenn die beiden Einzelbilder in einem gewissen Abstand hintereinander angeordnet sind, können auf diese Weise auch stereoskopische Bilder erzeugt werden. Insbesondere in diesem Falle können die beiden Einzelbilder auch durch LCD-Anzeigen (12, 13) erzeugt werden, die die Polarisation des hindurchtretenden Lichtes (18a, 18b, 18c) drehen.

FIG. 2b

"Anordnung zur Erzeugung eines Bildes"

Die Erfindung betrifft eine Anordnung zur Erzeugung eines Bildes aus Bildelementen, deren Größe bei normalem Betrachtungsabstand unterhalb des Auflösungsvermögens des menschlichen Auges liegt.

Die Erzeugung von Bildern aus einzelnen Bildelementen, deren Größe bei normalem Betrachtungsabstand unterhalb des Auflösungsvermögens des menschlichen Auges liegt, ist allgemein bekannt, beispielsweise aus dem Zeitungsdruck. Der Grauwert der einzelnen Bildelemente wird beispielsweise durch die Größe eines schwarzen Punktes auf dem hellen Untergrund des Bildelementes bestimmt. Auf diese Weise können, obwohl nur zwei Helligkeitswerte, nämlich schwarz oder weiß, dargestellt werden können, auch Zwischenwerte bzw. Graustufen dargestellt werden.

Aufgabe der Erfindung ist es, eine Anordnung zur Erzeugung eines Bildes anzugeben, die das Prinzip, Bilder aus kleinen Bildelementen zusammenzusetzen, auf neuartige Weise verwendet.

Diese Aufgabe wird erfindungsgemäß dadurch gelöst, daß mindestens zwei transparente Einzelbilder hintereinander angeordnet sind, bei denen die Transparenzen der Bildelemente so gewählt sind, daß der Mittelwert der Produkte der Transparenzen von jeweils in Blickrichtung hintereinander liegenden Bildelementen der beiden Einzelbilder über eine Anzahl benachbarter Bildelemente, die ein Bildgebiet bilden, der Transparenz des zu erzeugenden Bildes in diesem Bildgebiet entspricht.

Die dabei verwendeten Einzelbilder sind im wesentlichen unabhängig voneinander und auch unabhängig von dem zu erzeugenden Bild, da dessen Transparenz von Bildpunkt zu Bildpunkt variabel auf die beiden Einzelbilder aufgeteilt werden kann. Dadurch können die Einzelbilder so bestimmt werden, daß daraus das sich durch Hintereinanderanordnung ergebende Gesamtbild nicht zu erkennen ist. Auf diese Weise können Bilder verschlüsselt werden. Eine andere Anwendung besteht darin, andere Anordnungen zur Erzeugung von Bildern, beispielsweise Plotter oder digitale Filmaufzeichnungsgeräte, zu prüfen, indem mit dem zu prüfenden Gerät ein Einzelbild ausgegeben und dieses mit dem zugehörigen anderen, exakt aufgezeichneten Einzelbild zur Deckung gebracht wird, wobei sich ein bestimmtes resultierendes Bild nur dann ergibt, wenn das mit der zu prüfenden Anordnung erzeugte Bild unverzerrt wiedergegeben worden ist.

Im Grenzfall können beide Einzelbilder Abbildungen unterschiedlicher Gegenstände oder Szenen sein, die bei Anordnung hintereinander eine dritte, von den beiden anderen wiederum unabhängige Abbildung oder Szene ergeben.

Um das aus den Einzelbildern erzeugte Bild aus verschiedenen Blickwinkeln in gleicher Weise erkennen zu können, ist es zweckmäßig, daß die Einzelbilder unmittelbar benachbart sind. Dadurch überlagern sich dann aus verschiedenen Blickrichtungen immer die selben Bildelemente der Einzelbilder.

Mit der erfindungsgemäßen Anordnung ist es jedoch auch möglich, stereoskopische Bilder zu erzeugen. Hierfür ist eine Ausgestaltung der Erfindung dadurch gekennzeichnet, daß die Einzelbilder in einem derartigen Abstand voneinander angeordnet sind, daß bei Betrachtung mit beiden Augen für jedes Auge verschiedene Bildelemente der beiden Einzelbilder hintereinander liegen und daß die Produkte der Transparenzen der für beide Augen unterschiedlichen hintereinander liegenden Paare von Bildelementen die beiden stereoskopischen Bilder der Ansicht einer Szene ergeben. Hierbei ist der Blickwinkel zum Erkennen des stereoskopischen Bildes allerdings begrenzt.

Im einfachsten Fall können die Einzelbilder transparente Filmbilder sein. Auf diese Weise sind statische Abbildungen möglich. Für die Erzeugung von Bildern mit zeitlich sich verändernden Abbildungen oder Szenen ist es dagegen zweckmäßig, daß die Einzelbilder durch Einrichtungen erzeugt sind, bei denen die Transparenzen der einzelnen Bildelemente elektrisch steuerbar sind. Eine solche Einrichtung ist vorzugsweise eine LCD-Anzeige, die die Polarisationsebene des durchtretenden Lichtes abhängig von Steuersignalen drehen und die zwischen zwei Polarisatoren angeordnet sind. Diese letztere Ausgestaltung ist besonders günstig geeignet für die Darstellung stereoskopischer Bilder, beispielsweise für Fernsehzwecke.

Ausführungsbeispiele der Erfindung werden anhand der Zeichnungen erläutert. Es zeigen:

Fig. 1 die Erzeugung eines Bildes aus zwei Einzelbildern, wobei alle drei Bilder weitgehend voneinander unabhängig sind,

Fig. 2a und 2b eine Anordnung zur Erzeugung stereoskopischer Bilder.

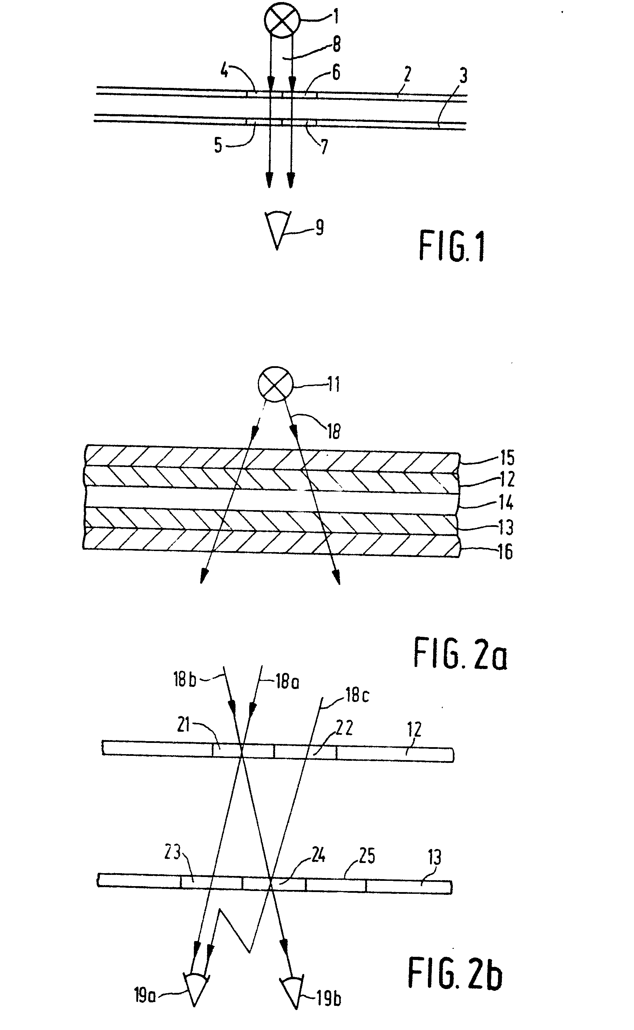

In Fig. 1 werden zwei Einzelbilder 2 und 3, die im Querschnitt dargestellt sind, dicht hintereinander angeordnet. Auf der einen Seite der beiden Einzelbilder ist eine Lichtquelle 1 angeordnet, deren Lichstrahlen 8 die beiden Einzelbilder 2 und 3 durchdringen und auf das Auge 9 des Betrachters fallen. Der eine der beiden dargestellten Lichtstrahlen durchläuft das Bildelement 4 des Einzelbildes 2 sowie das Bildelement 5 des Einzelbildes 3, so daß für den Betrachter 9 ein Bildelement mit einer resultierenden Transparenz gleich dem Produkt der Transparenzen der beiden Bildelemente 4 und 5 erzeugt wird. In gleicher Weise erzeugt der andere, durch die Bildelemente 6 und 7 der Einzelbilder 2 und 3 hindurchdringende Lichtstrahl für den Betrachter 9 den Eindruck eines Bildelementes, dessen Transparenz gleich dem Produkt der Transparenzen der beiden Bildelemente 6 und 7 ist. Die Größe der einzelnen Bildelemente 4, 5, 6 und 7 ist so gering, daß sie vom Auge nicht einzeln erkannt werden können, so daß beide Paare von Bildelementen 4 und 5 sowie 6 und 7 als ein Bildgebiet erscheinen, dessen Transparenz gleich dem Mittelwert aus den beiden resultierenden Transparenzen erscheint. Bei genügend geringer Ausdehnung der einzelnen Bildelemente tragen noch weitere benachbarte, nicht dargestellte Bildelemente beider Einzelbilder 2 und 3 zu dem Gesamteindruck eines Bildgebietes bei.

Wenn der Einfachheit halber nur zwei benachbarte Bildelemente betrachtet werden, wobei die Transparenzen der Bildelemente 4 und 6 mit a und b und die Transparenzen der Bildelemente 5 und 7 mit c und d und die resultierende Transparenz des durch die beiden Bildelemente 4 und 6 gebildeten Bildgebietes mit X und entsprechend für die Bildelemente 5 und 7 mit Y bezeichnet wird, während die resultierende Tranparenz aus allen vier Bildelementen mit P bezeichnet wird, ergeben sich folgende Zusammenhänge:

$$a + b = 2X; \quad c + d = 2Y; \quad 0 \leq a, b, c, d \leq 1 \qquad (1)$$

$$ac + bd = 2P; \quad 0 \leq P \leq 1 \qquad (2)$$

Wenn nun ferner davon ausgegangen wird, daß beide Bilder im wesentlichen unabhängig voneinander und von dem durch die Anordnung hintereinander entstehenden Bild sein sollen, d.h. die Werte X, Y und P sind vorgegeben, ergeben sich für die Transparenzen der einzelnen Bildpunkte folgende Bedingungen:

$$a = \frac{P-Xd}{Y-d} \;;\; b = 2X-a; \quad c = 2Y-d$$

und

$$\max\left[0, A, \frac{P}{X}, 2Y-\frac{P}{X}, \frac{(2X-1)Y-P}{X-1}, 2Y-1\right] \leq d \leq \min\left[1, 2Y\right]$$

oder

$$\max\left[0, 2Y-1\right] \leq d \leq \min\left[1, Y, \frac{P}{X}, \frac{(2X-1)Y-P}{Y-1}, 2Y\right]$$

(3)

Damit eine Lösung dieser Gleichungen für alle Kombinationen von vorgegebenen Transparenzen der Bilder möglich ist, muß gegebenenfalls der Bereich der Transparenzen der einzelnen Bilder eingeschränkt werden.

Eine Anordnung zur Darstellung von Bildfolgen, die einen Bewegungsablauf zeigen können, ist in Fig. 2 dargestellt. Dieses Beispiel eignet sich vorzugsweise für die Erzeugung stereoskopischer Bilder für Fernsehzwecke.

In Fig. 2a ist ein Querschnitt durch die gesamte Anordnung gezeigt. Die beiden Einzelbilder werden durch je eine LCD-Anzeigeeinrichtung 12 und 13 erzeugt, die durch einen Zwischenraum 14 voneinander getrennt sind. Derartige LCD-Einrichtungen drehen die Polarisationsebene des durchgehenden Lichtes um einen Winkel, der durch eine Steuerspannung beeinflußt werden kann. Vor der Anzeigeeinrichtung 12 ist ein Polarisator 15 angeordnet, der die von der Lichtquelle 11 ausgehenden Lichtstrahlen 18 in einer bestimmten Ebene polarisiert. Entsprechend ist in Richtung der Lichtstrahlen hinter der Anzeigeeinrichtung 13 ein weiterer Polarisator 16 als Analysator angeordnet, der abhängig von der gedrehten Polarisationsebene der Lichtstrahlen 18 eine mehr oder weniger große Lichtmenge austreten läßt. Bei dieser Anordnung haben die Bildelemente
der beiden durch die Einrichtungen 12 und 13 gebildeten
Einzelbilder keine einzelnen Transparente im eigentlichen
Sinne, sondern die Transparenz eines Bildpunktes im resultierenden Bild hängt ab von der Summe der Drehungen der
Polarisationsebene des durch beide Einrichtungen 12 und 13
hindurchtretenden Lichtstrahles sowie von der Ausrichtung
der beiden Polarisatoren 15 und 16 zueinander.

In Fig. 2b sind die Verhältnisse für den Fall der Erzeugung eines stereoskopischen Bildes näher dargestellt. Das
linke Auge 9a eines Betrachters empfängt den Lichtstrahl 18a, der durch das Bildelement 21 der Einrichtung
12 und das Bildelement 23 der Einrichtung 13 hindurchgegangen ist. Entsprechend empfängt das rechte Auge 19b
den Lichtstrahl 18b, der durch das selbe Bildelement 21
der Einrichtung 12, jedoch durch das Bildelement 24 der
Einrichtung 13 hindurchgetreten ist. Entsprechend setzt
sich das benachbarte resultierende Bildelement für das
linke Auge 19a aus dem Bildelement 22 der Einrichtung 12
und dem Bildelement 24 der Einrichtung 13 zusammen, die
von dem Lichtstrahl 18c durchlaufen werden. Dabei ist zu
berücksichtigen, daß die Fig. 2b nicht maßstabsgerecht
dargestellt ist, sondern der Abstand der Augen 19a und 19b
des Betrachters von den Einrichtungen 12 und 13 ist
tatsächlich sehr viel größer als dargestellt, während
andererseits die Ausdehnung der Bildelemente im Verhältnis
zum Abstand der Einrichtungen 12 und 13 wesentlich kleiner
ist.

Die Bestimmung des Winkels, um den die Polarisationsebene
in den einzelnen Bildpunkten beider Einrichtungen 12 und
13 gedreht werden muß, kann nach folgender Gesetzmäßigkeit vorgenommen werden. Die Transparenzen bzw. Helligkeiten, in der ein Bildpunkt für das rechte und das linke Auge erscheint, werden mit $P_n$ und $Q_n$ bezeichnet, wobei

$$P_n = \left| \cos \quad _n \right| ; \; Q_n = \left| \cos \quad _n \right| \qquad (4)$$

ist und $\Theta_n$ und $\phi_n$ die Gesamtdrehung der Polarisationsebene ist, die beispielsweise die Lichtstrahlen 18a und 18b erfahren. Da diese Drehungen der Polarisationsebene sich additiv überlagern, gilt

$$a_n + b_n = \Theta_n$$
$$a_n + b_{n+1} = \phi_n \qquad (5)$$

wobei $a_n$ die Drehung der Polarisationsebene im Bildelement 21 der Einrichtung 12, $b_n$ die Drehung im Bildelement 23 und $b_{n+1}$ die Drehung im Bildelement 24 der Einrichtung 13 ist. Es gibt allgemein mehrere Drehungswinkel, die diese Bedingungen erfüllen. Zweckmäßig ist eine etwa gleichmäßige Aufteilung der Drehungswinkel der Polarisationsebene auf beide Einrichtungen 12 und 13. Eine rekursive Lösung der zuletzt angegebenen Gleichungen ist wie folgt

$$a_n = \Theta_n - b_n$$
$$b_{n+1} = \phi_n - a_n \qquad (6)$$

wobei alle Winkelwerte modulo $2\pi$ zu nehmen sind. Insbesondere im Falle eines Fernsehbildes kann am Anfang der Zeile der erste Wert gleich Null gesetzt werden, so daß sich unmittelbar die Lösungen für die Winkel der einzelnen aufeinanderfolgender Bildpunkte einer Zeile ergeben. Dies kann mit elektronischen Mitteln sehr leicht durchgeführt werden.

Allgemein kann, insbesondere bei dem Fall nach Fig. 1, auch eine mehrdimensionale Abhängigkeit der Bildpunkte berücksichtigt werden, d.h. ein Bildgebiet setzt sich aus mehr als zwei Bildpunkten in einer zweidimensionalen Anordnung zusammen. Hierfür ergeben sich dann zwar etwas andere Bedingungen für die Bestimmung der einzelnen Grauwerte bzw. Winkeldrehungen der Polarisationsebene.

## PATENTANSPRÜCHE

1.    Anordnung zur Erzeugung eines Bildes aus Bildelementen, deren Größe bei normalem Betrachtungsabstand
unterhalb des Auflösungsvermögens des menschlichen Auges
liegt,
dadurch gekennzeichnet, daß mindestens zwei transparente
Einzelbilder hintereinander angeordnet sind, bei denen die
Transparenzen der Bildelemente so gewählt sind, daß der
Mittelwert der Produkte der Transparenzen von jeweils in
Blickrichtung hintereinander liegenden Bildelementen der
beiden Einzelbilder über eine Anzahl benachbarter Bildelemente, die ein Bildgebiet bilden, der Transparenz des
zu erzeugenden Bildes in diesem Bildgebiet entspricht.

2.    Anordnung nach Anspruch 1,
dadurch gekennzeichnet, daß mindestens ein Einzelbild
ein Bild mit vom zu erzeugenden Bild unabhängigen Inhalt
ist.

3.    Anordnung nach Anspruch 1 oder 2,
dadurch gekennzeichnet, daß beide Einzelbilder  unmittelbar benachbart sind.

4.    Anordnung nach Anspruch 1,
dadurch gekennzeichnet, daß die Einzelbilder in einem
derartigen Abstand voneinander angeordnet sind, daß bei
Betrachtung mit beiden Augen für jedes Auge verschiedene
Bildelemente der beiden Einzelbilder hintereinander liegen
und daß die Produkte der Transparenzen der für beide Augen
unterschiedlichen hintereinander liegenden Paare von
Bildelementen die beiden stereoskopischen Bilder der
Ansicht einer Szene ergeben.

5. Anordnung nach Anspruch 1 oder einem der folgenden, dadurch gekennzeichnet, daß die Einzelbilder durch Einrichtungen erzeugt sind, bei denen die Transparenzen der einzelnen Bildelemente elektrisch steuerbar sind.

6. Anordnung nach Anspruch 5, dadurch gekennzeichnet, daß die Einrichtungen LCD-Anzeigen sind, die die Polarisationsebene des durchtretenden Lichtes abhängig von Steuersignalen drehen und die zwischen zwei Polarisatoren angeordnet sind.

0185419

FIG.1

FIG.2a

FIG.2b

PHD 84-167